# EUROPÄISCHE PATENTANMELDUNG

(11) **EP 3 967 409 A1**
(43) Veröffentlichungstag der Anmeldung: **16.03.2022**
(21) Anmeldenummer: 21191428.8
(22) Anmeldetag: 16.08.2021
(51) Int. Cl.: B05B 7/06

(54) **DICHTELEMENT ZUM ABDICHTEN EINES ÜBERGANGS ZWISCHEN EINEM GRUNDKÖRPER EINER SPRITZPISTOLE UND EINEM ANBAUTEIL EINER SPRITZPISTOLE, ANBAUTEIL, INSBESONDERE FARBDÜSENANORDNUNG, FÜR EINE SPRITZPISTOLE UND SPRITZPISTOLE, INSBESONDERE FARBSPRITZPISTOLE**

(30) Priorität: 11.09.2020 DE 102020123769
(71) Anmelder: SATA GmbH & Co. KG, 70806 Kornwestheim (DE)
(72) Erfinder: Volk, Eva, 71638 Ludwigsburg (DE); Maier, Norbert, 71573 Allmersbach i.T. (DE); Gehret, Stefan, 72072 Tübingen-Derendingen (DE)

(57) **Zusammenfassung**

Die Erfindung betrifft ein Dichtelement (440) zum Abdichten eines Übergangs zwischen einem Grundkörper (20) einer Spritzpistole (1), insbesondere Farbspritzpistole, und einem Anbauteil einer Spritzpistole (1), insbesondere Farbspritzpistole, insbesondere einer Farbdüse (40), wobei das Dichtelement (440) derart ausgestaltet ist, dass es bei im Grundkörper (20) angeordnetem Anbauteil eine axial wirkende Dichtfläche (56) und eine radial wirkende Dichtfläche (58) mit dem Grundkörper (20) und/oder dem Anbauteil bildet. Die Erfindung betrifft ferner ein Anbauteil, insbesondere eine Farbdüsenanordnung (240), für eine Spritzpistole (1), insbesondere Farbspritzpistole, und eine Spritzpistole (1), insbesondere Farbspritzpistole, die jeweils ein solches Dichtelement (440) aufweisen.

Das erfindungsgemäße Dichtelement (440) bietet durch die axial wirkende Dichtfläche (56) und die radial wirkende Dichtfläche (58) eine gegenüber Dichtelementen aus dem Stand der Technik deutlich verbesserte Dichtwirkung.

## Beschreibung

Die Erfindung betrifft ein Dichtelement zum Abdichten eines Übergangs zwischen einem Grundkörper einer Spritzpistole, insbesondere Farbspritzpistole, und einem Anbauteil einer Spritzpistole gemäß dem Oberbegriff des Anspruchs 1, ein Anbauteil, insbesondere eine Farbdüsenanordnung, für eine Spritzpistole, insbesondere Farbspritzpistole, gemäß dem Oberbegriff des Anspruchs 5 und eine Spritzpistole, insbesondere Farbspritzpistole, gemäß dem Oberbegriff des Anspruchs 7.

Gemäß dem Stand der Technik weist eine Spritzpistole, insbesondere Farbspritzpistole, insbesondere druckluftzerstäubende Farbspritzpistole, an ihrem Kopf eine auch als Materialdüse bezeichnete Farbdüse auf, welche in den Pistolenkörper eingeschraubt wird. Die Farbdüse weist an ihrem vorderen Ende häufig ein hohlzylindrisches Zäpfchen auf, aus deren vorderer Mündung beim Betrieb der Spritzpistole das zu verspritzende Material austritt. Die Farbdüse kann in ihrem vorderen Bereich jedoch auch konisch ausgestaltet sein. Der Pistolenkopf weist in der Regel ein Außengewinde auf, über das ein Luftdüsenring mit einer darin angeordneten Luftkappe am Pistolenkopf angeschraubt wird. Die Luftkappe weist eine zentrale Öffnung auf, deren Durchmesser größer ist als der Außendurchmesser des Farbdüsenzäpfchens bzw. der Außendurchmesser des vorderen Endes einer konischen Farbdüse. Die zentrale Öffnung der Luftkappe und das Zäpfchen bzw. das vordere Ende der Farbdüse bilden zusammen einen Ringspalt. Aus diesem Ringspalt tritt die sogenannte Zerstäuberluft aus, welche in der oben beschriebenen Düsenanordnung einen Unterdruck an der Stirnfläche der Farbdüse erzeugt, wodurch das zu verspritzende Material aus der Farbdüse herausgesaugt wird. Das zu zerstäubende Material wird der Zerstäuberluft zugeführt und in Fäden und Bänder zerrissen. Diese Fäden und Bänder zerfallen aufgrund ihrer hydrodynamischen Instabilität, der Wechselwirkung zwischen der schnell strömenden Druckluft und der Umgebungsluft sowie aufgrund von aerodynamischen Störungen zu Tröpfchen, welche durch die Zerstäuberluft von der Düse weggeblasen werden.

Die Luftkappe weist häufig ferner zwei Hörner auf, welche einander diametral gegenüberstehen und in Ausströmrichtung über den genannten Ringspalt und die Farbauslassöffnung hinausstehen. Von der Rückseite der Luftkappe verlaufen zwei Versorgungsbohrungen, d.h. Hornluftzuführkanäle, zu Hornluftbohrungen in den Hörnern. In der Regel weist jedes Horn zumindest eine Hornluftbohrung auf, bevorzugt weist jedes Horn jedoch zumindest zwei Hornluftbohrungen auf, aus welchen die Hornluft austritt. Die Hornluftbohrungen sind in der Regel so orientiert, dass sie auf die Düsenlängsachse in Austrittsrichtung nach dem Ringspalt zeigen, sodass die aus den Hornluftbohrungen austretende sogenannte Hornluft die bereits aus dem Ringspalt ausgetretene Luft bzw. den Farbstrahl oder den bereits zumindest teilweise entstandenen Farbnebel beeinflussen können. Dadurch wird der Farbstrahl oder auch Spritzstrahl mit ursprünglich kreisrundem Querschnitt (Rundstrahl) an seinen den Hörnern zugewandten Seiten zusammengedrückt und in senkrecht dazu stehender Richtung verlängert. Dadurch entsteht ein sogenannter Breitstrahl, welcher eine größere Flächenlackiergeschwindigkeit erlaubt. Neben der Verformung des Spritzstrahls bezweckt die Hornluft eine weitere Zerstäubung des Spritzstrahls.

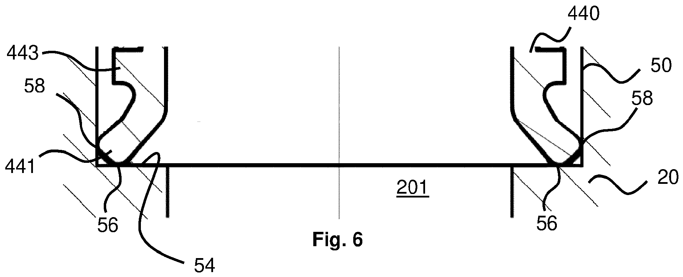

Die oben genannte Farbdüse weist häufig eine Farbdüsendichtung auf. Eine solche Farbdüsendichtung ist beispielsweise in der DE 10 2018 118 737 A1 offenbart. Die dort insbesondere in den Fig. 11 und 12 gezeigte Farbdüsendichtung 44 ist bei eingeschraubter Düse 24 gegen eine Gegendichtfläche 84, die in Fig. 6 gezeigt ist, gepresst und dichtet den materialführenden Bereich der Spritzpistole, insbesondere den Übergangsbereich zwischen Farbkanal im Grundköper und hohlem Abschnitt der Farbdüse 40 zur Durchleitung des zu verspritzenden Materials, gegenüber dem luftführenden Bereich der Spritzpistole ab.

Eine derartige Farbdüsendichtung hat sich über viele Jahre bewährt. Dennoch bestehen Verbesserungspotenziale hinsichtlich Dichtheit und Herstellbarkeit. Eine hohe Dichtheit ist erstrebenswert, da bei mangelhafter Abdichtung, beispielsweise zwischen Grundkörper und Farbdüse, das zu verspritzende Material den Übergang zwischen dem Grundkörper und der Farbdüse in unerwünschter Weise verlassen und in den luftführenden Bereich der Spritzpistole gelangen könnte. Dies könnte zu einer Verschmutzung der Luftkanäle und Luftauslässe der Spritzpistole und zu einer Beeinträchtigung der Spritzqualität führen.

Eine Aufgabe der vorliegenden Erfindung ist es daher, ein Dichtelement bereitzustellen, mittels dessen eine bessere Abdichtung eines Übergangs zwischen einem Grundkörper einer Spritzpistole und einem Anbauteil einer Spritzpistole gewährleistet werden kann und welche einfacher herzustellen ist.

Eine weitere Aufgabe der vorliegenden Erfindung ist es, ein Anbauteil, insbesondere eine Farbdüsenanordnung, für eine Spritzpistole, insbesondere Farbspritzpistole, und eine Spritzpistole, insbesondere Farbspritzpistole, bereitzustellen, bei denen ein Übergang zwischen einem Anbauteil und einem Grundkörper einer Spritzpistole besser abgedichtet ist.

Die erste Aufgabe wird durch ein Dichtelement zum Abdichten eines Übergangs zwischen einem Grundkörper einer Spritzpistole, insbesondere Farbspritzpistole, und einem Anbauteil einer Spritzpistole, insbesondere einer Farbdüse, gelöst, wobei das Dichtelement derart ausgestaltet ist, dass es bei im Grundkörper angeordnetem Anbauteil eine axial wirkende Dichtfläche und eine radial wirkende Dichtfläche mit dem Grundkörper und/oder dem Anbauteil bildet.

Bei dem Anbauteil handelt es sich bevorzugt um eine Farbdüse oder um eine Farbdüsenanordnung, es kann sich jedoch auch um ein anderes Anbauteil handeln, wie z.B. eine Rund-Breitstrahlregulierung, eine Materialmengenregulierung, ein Luftmikrometer, einen Druckluftanschluss oder um eine Materialzufuhr, wie beispielsweise einen Farbbecher oder einen Schlauch.

Unter einer Farbdüsenanordnung kann beispielsweise eine Anordnung aus einer, insbesondere einstückigen, Farbdüse und zumindest einer weiteren Komponente, wie z.B. einer Drossel, einer Scheibe, einem Dichtelement, insbesondere einem unten näher beschriebenen Dichtelement, und/oder einer anderen Komponente verstanden werden.

Der Grundkörper weist bevorzugt einen Griffbereich und einen oberen Grundkörper mit Kopfbereich und Aufhängehaken auf. Vorzugsweise ist der Grundkörper einteilig ausgestaltet, er kann jedoch auch mehrteilig sein.

Unter einer axial wirkenden Dichtfläche ist vorliegend zu verstehen, dass eine Fläche des Dichtelements dichtend an einer Gegendichtfläche anliegt, wobei die Fläche des Dichtelements und die Gegendichtfläche, vorliegend eine Gegendichtfläche am Grundkörper einer Spritzpistole, in axialer Richtung, d.h. entlang einer Längsachse des Dichtelements, aneinander liegen, insbesondere aneinandergedrückt sind.

Unter einer radial wirkenden Dichtfläche ist vorliegend zu verstehen, dass eine Fläche des Dichtelements dichtend an einer Gegendichtfläche anliegt, wobei eine Fläche am Innen- und/oder Außenumfang des Dichtelements und eine Gegendichtfläche am Innen- und/oder Außenumfang einer Komponente, vorliegend an einem Innen- und/oder Außenumfang im oder am Grundkörper einer Spritzpistole, in radialer Richtung aneinander liegen, insbesondere aneinandergedrückt sind.

Das erfindungsgemäße Dichtelement bietet durch die axial wirkende und die radial wirkende Dichtfläche eine gegenüber Dichtelementen aus dem Stand der Technik deutlich verbesserte Dichtwirkung. Das zu verspritzende Material müsste zwei in Form von Dichtflächen vorliegende Barrieren überwinden anstatt nur einer, um den Übergang zwischen beispielsweise der Farbdüse und dem Grundkörper der Spritzpistole in unerwünschter Weise zu verlassen und in den luftführenden Bereich der Spritzpistole zu gelangen. Des Weiteren müsste das Material auch noch einen Richtungswechsel, beispielsweise von radialer Richtung in axiale Richtung, vollziehen. Besonders vorteilhaft ist, dass die axial wirkende Dichtfläche und die radial wirkende Dichtfläche von ein und demselben Dichtelement gebildet werden. Das bedeutet, es ist nicht ein Dichtelement für die radiale Abdichtung und ein weiteres Dichtelement für die axiale Abdichtung notwendig, sondern ein einziges Dichtelement erfüllt diese Aufgaben. Beim erfindungsgemäßen Dichtelement können die radiale Dichtfläche und die axiale Dichtfläche sogar vom selben Teil des Dichtelements gebildet werden, beispielsweise von einem unten näher beschriebenen, als Hohlkegelstumpf ausgestalteten, hinteren Abschnitt des Dichtelements, was insbesondere die Herstellung des Dichtelements vereinfacht. Falls erforderlich können natürlich trotzdem ein oder mehrere weitere Dichtmittel vorgesehen sein.

Ein Vorteil der Aufspreizung des Dichtelements zur Bildung einer radialen Dichtfläche gegenüber der Verwendung eines mittels Presspassung eingebrachten Dichtelements liegt darin, dass das sich aufspreizende Dichtelement leichter montiert werden kann und weniger strengen Toleranzanforderungen entsprechen muss als ein mittels Presspassung eingebrachtes Dichtelement.

Die zweite Aufgabe wird durch ein Anbauteil, insbesondere eine Farbdüsenanordnung, für eine Spritzpistole, insbesondere Farbspritzpistole, gelöst, wobei sie zumindest ein oben und weiter unten näher beschriebenes Dichtelement aufweist.

Auch bei diesem Anbauteil handelt es sich bevorzugt um eine Farbdüse oder um eine Farbdüsenanordnung, es kann sich jedoch auch um ein anderes Anbauteil handeln, wie z.B. eine Rund-Breitstrahlregulierung, eine Materialmengenregulierung, ein Luftmikrometer, einen Druckluftanschluss oder um eine Materialzufuhr, wie beispielsweise einen Farbbecher oder einen Schlauch.

Unter einer Farbdüsenanordnung kann auch hier beispielsweise eine Anordnung aus einer, insbesondere einstückigen, Farbdüse und zumindest einer weiteren Komponente, wie z.B. einer Drossel, einer Scheibe, einem Dichtelement, insbesondere einem unten näher beschriebenen Dichtelement, und/oder einer anderen Komponente verstanden werden.

Die zweite Aufgabe wird ferner durch eine Spritzpistole, insbesondere Farbspritzpistole, gelöst, wobei sie zumindest ein oben und weiter unten näher beschriebenes Dichtelement und/oder ein oben und weiter unten näher beschriebenes Anbauteil aufweist.

Ausführungen zum erfindungsgemäßen Dichtelement gelten für die erfindungsgemäße Farbdüsenanordnung und für die erfindungsgemäße Spritzpistole entsprechend.

Vorteilhafte Ausgestaltungen sind Gegenstand der Unteransprüche.

Vorzugsweise ist das Dichtelement derart ausgestaltet, dass es sich beim Anordnen, insbesondere beim Festziehen, des Anbauteils im Grundkörper an zumindest einem Ende aufspreizt und dadurch die radial wirkende Dichtfläche mit dem Grundkörper und/oder dem Anbauteil bildet.

Das Anbauteil, insbesondere die Farbdüse bzw. die Farbdüsenanordnung, kann z.B. in den Grundkörper einschraubbar sein. Das Dichtelement kann sich bereits von Beginn des Anordenvorgangs, insbesondere zu Beginn des Einschraubens des Anbauteils im Grundkörper, aufspreizen, bevorzugt spreizt es sich jedoch erst gegen Ende des Anordenvorgangs, insbesondere gegen Ende des Einschraubens, auf, d.h. beim Festziehen des Anbauteils im Grundkörper auf. Als Aufspreizen wird vorliegend insbesondere die Vergrößerung eines Umfangs und/oder eines Durchmessers des Dichtelements, vorzugsweise eines Teils des Dichtelements, besonders bevorzugt eines Endes des Dichtelements, verstanden, insbesondere durch Materialdehnung. Das Dichtelement ist vorzugsweise im gespannten Zustand gespreizt, besonders bevorzugt reversibel. Im ungespannten Zustand, wenn das Anbauteil nicht im Grundkörper der Spritzpistole angeordnet ist, ist das Dichtelement nicht gespreizt und besitzt einen ersten Außendurchmesser bzw. Außenumfang. Wird das Anbauteil im Pistolenkörper festgezogen, erfolgt die Spreizung, und das Dichtelement liegt in seinem gespannten Zustand vor. In diesem Zustand hat zumindest ein Teil des Dichtelements, besonders bevorzugt ein Ende des Dichtelements, einen zweiten Außendurchmesser bzw. Außenumfang, der größer ist als der erste Außendurchmesser bzw. Außenumfang. Vorzugsweise handelt es sich bei dem zweiten Außendurchmesser bzw. Außenumfang um den maximalen Außendurchmesser bzw. Außenumfang des Dichtelements, d.h. das Dichtelement hat an keiner Stelle einen größeren Außendurchmesser bzw. Außenumfang als an der gespreizten Stelle. Beim Lockern und/oder Lösen nimmt das Dichtelement im Idealfall wieder seinen nicht gespreizten Zustand ein und der vormals gespreizte Teil des Dichtelements besitzt wieder den ersten Außendurchmesser bzw. Außenumfang. In der Realität kann eine geringe bleibende Verformung des gespreizten Teils erfolgen, d.h. der Außendurchmesser bzw. Außenumfang des vormals gespreizten Teils des Dichtelements ist etwas größer als der erste Außendurchmesser bzw. Außenumfang vor dem erstmaligen Spannen des Dichtelements, aber deutlich kleiner als der zweiten Außendurchmesser bzw. Außenumfang des gespreizten Teils des Dichtelements.

Bevorzugt weist das Dichtelement einen vorderen Abschnitt mit zumindest einer Einrichtung zur Anordnung des Dichtelements an einem Anbauteil, insbesondere einer Rastnase, insbesondere einer umlaufenden Rastnase, und einen hinteren Abschnitt auf, wobei der hintere Abschnitt als Hohlkegelstumpf ausgestaltet ist.

Das Dichtelement kann im Wesentlichen hohlzylindrisch ausgestaltet sein, d.h. in Form einer Hülse. Als vorderer Abschnitt wird vorliegend die der Farbdüse, insbesondere die der Farbauslassöffnung der Farbdüse, zugewandte Seite des Dichtelements verstanden. An diesem vorderen Abschnitt, vorzugsweise an dessen Außenumfang, weist das Dichtelement die genannte Rastnase oder zumindest einen, vorzugsweise umlaufenden, Haken auf, mittels derer das Dichtelement, vorzugsweise lösbar, an der Farbdüse anordenbar ist. Diese Rastnasen können in einen Hinterschnitt am Innenumfang der Farbdüse eingreifen. Das Dichtelement kann aber auch eine, vorzugsweise umlaufende, Nut aufweisen, in die ein Vorsprung am Innenumfang der Farbdüse eingreifen kann. Selbstverständlich kann auch die Farbdüse die Rastnase und das Dichtelement den Hinterschnitt aufweisen bzw. die Farbdüse kann die Nut und das Dichtelement den Vorsprung aufweisen. Auch andere Verbindungsarten sind denkbar, beispielsweise eine Schraubverbindung oder aber auch eine unlösbare Verbindung wie eine Verklebung. Bevorzugt wird jedoch eine lösbare Verbindung, um den Austausch des Dichtelements bei Verschleiß zu ermöglichen.

Als hinterer Abschnitt wird vorliegend die der Farbdüse, insbesondere der Farbauslassöffnung der Farbdüse, abgewandte Seite des Dichtelements verstanden. Dieser Abschnitt ist vorzugsweise als Hohlkegelstumpf ausgestaltet, d.h. der Abschnitt weitet sich nach hinten hin auf. Besonders bevorzugt handelt es sich bei dem hinteren Abschnitt, bzw. bei dem hinteren Teil des hinteren Abschnitts, um den sich aufspreizenden Teil des Dichtelements.

Zwischen dem vorderen und dem hinteren Abschnitt des Dichtelements kann ein im Wesentlichen zylindrischer Abschnitt angeordnet sein. Dieser kann an seiner äußeren Umfangsfläche einen, vorzugsweise umlaufenden, Kragen aufweisen, der als Stopper für das Aufstecken des Dichtelements auf die Farbdüse fungieren kann.

Vorzugsweise besteht das Dichtelement zumindest teilweise aus einem flexiblen Material, insbesondere aus Kunststoff oder einer Kunststoffmischung, vorzugsweise aus HDPE. Insbesondere der eine axial wirkende Dichtfläche und eine radial wirkende Dichtfläche bildende Teil des Dichtelements sollten aus einem flexiblen Material, insbesondere aus Kunststoff oder einer Kunststoffmischung, vorzugsweise aus HDPE, bestehen, um die Funktionsfähigkeit des Dichtelements zu gewährleisten, indem sich der Teil des Dichtelements ausreichend aufspreizt. Vorzugsweise ist das Dichtelement vollständig aus einem solchen Material.

Das erfindungsgemäße Anbauteil, bei dem es sich vorzugsweise um eine Farbdüsenanordnung handelt, weist bevorzugt ferner zumindest ein vorderes Ende mit einer Farbauslassöffnung, ein hinteres Ende mit einer Farbeinlassöffnung und einen dazwischenliegenden, im Wesentlichen hohlzylindrischen, Abschnitt, auf, wobei das Dichtelement zumindest bereichsweise im Wesentlichen den gleichen Innendurchmesser aufweist wie der im Wesentlichen hohlzylindrische Abschnitt. Dadurch ist ein besonders ungestörter Fluss des zu verspritzenden Materials vom Dichtelement in den im Wesentlichen hohlzylindrischen Abschnitt der Farbdüse möglich. Besonders bevorzugt weist das Dichtelement zumindest bereichsweise im Wesentlichen den gleichen Innendurchmesser auf wie ein hinter dem Dichtelement liegender Farbkanal im Grundkörper der Spritzpistole, was zu einem ungestörten Fluss des zu verspritzenden Materials vom Farbkanal in das Dichtelement ermöglicht. Ferner können dadurch Stufen vermieden werden, in denen sich Farbe sammelt, eintrocknet und den Materialfluss und die Materialqualität, insbesondere die Materialreinheit negativ beeinflussen könnte.

Die erfindungsgemäße Spritzpistole weist bevorzugt ferner zumindest einen Grundkörper auf, wobei der Grundkörper zumindest einen Bereich zur Aufnahme eines Anbauteils, insbesondere einer Farbdüse und/oder einer Farbdüsenanordnung, aufweist, wobei der Bereich zumindest einen im Wesentlichen zylindrischen Wandabschnitt, insbesondere einen zumindest teilweise ein Gewinde, vorzugsweise ein Innengewinde, aufweisenden Wandabschnitt, mit einer an einem Ende des Wandabschnitts angeordneten Schulter, insbesondere einer umlaufend ausgestalteten Schulter, aufweist.

Mittels des Gewindes am im Wesentlichen zylindrischen Wandabschnitt im Grundkörper wird die ein mit diesem Gewinde korrespondierendes Gewinde aufweisende Farbdüsenanordnung, die insbesondere aus einer Farbdüse und dem erfindungsgemäßen Dichtelement bestehen kann, in den Grundkörper der Spritzpistole eingeschraubt. Da der Außendurchmesser bzw. Außenumfang des Dichtelements höchstens so groß ist wie der Innendurchmesser des zylindrischen Wandabschnitts, vorzugsweise jedoch etwas kleiner, berühren sich das Dichtelement und der zylindrischen Wandabschnitts zunächst nicht oder streifen sich höchsten leicht. Gegen Ende des Einschraubvorgangs berührt das hintere Ende des hinteren Abschnitts des Dichtelements die an einem Ende des Wandabschnitts angeordnete Schulter, welche vorzugsweise umlaufend ausgestaltetet ist. Wird die Farbdüsenanordnung weiter in den Grundkörper eingeschraubt, insbesondere festgezogen, so wird der hintere Abschnitt immer stärker gegen die Schulter gedrückt, wodurch die axial wirkende Dichtfläche zwischen dem Dichtelement und dem Grundkörper gebildet wird. Durch die besondere Ausgestaltung dieses Teils des Dichtelements, insbesondere durch die Ausgestaltung als Hohlkegelstumpf, wird der Teil aufgeweitet, d.h. er spreizt sich auf. Der Außendurchmesser bzw. Außenumfang des genannten Teils des Dichtelements wird größer, bis er im Laufe des weiteren Einschraubvorgangs immer stärker gegen den zylindrischen Wandabschnitt im Grundkörper, den er zu Beginn des Einschraubvorgangs noch kaum berührt hat, gedrückt wird. Dadurch wird die radial wirkende Dichtfläche zwischen dem Dichtelement und dem Grundkörper gebildet. Wie oben bereits beschrieben, kann dadurch, dass sowohl eine axial wirkende Dichtfläche als auch eine radial wirkende Dichtfläche vorliegt, das Risiko reduziert werden, dass das zu verspritzende Material aus dem Farbkanal im Grundkörper der Spritzpistole zwischen dem Grundkörper und der Farbdüse hindurchfließt und in den luftführenden Bereich der Spritzpistole gelangt.

Wie bereits erwähnt, ist ein Innendurchmesser des Bereichs zur Aufnahme eines Anbauteils, insbesondere ein Innendurchmesser des im Wesentlichen zylindrischen Wandabschnitts, besonders bevorzugt zumindest bereichsweise größer oder gleich einem Außendurchmesser des Dichtelements. Dadurch ist beispielsweise ein leichteres Anordnen, insbesondere Einschrauben, der Farbdüsenanordnung mit dem Dichtelement in den Bereich zur Aufnahme eines Anbauteils möglich, da kein oder nur ein sehr geringer Reibungswiderstand zwischen dem Dichtelement und dem zylindrischen Wandabschnitt des Aufnahmebereichs überwunden werden muss. Ferner kann dadurch eine Abnutzung des Dichtelements, der im Falle eines größeren Außendurchmessers des Dichtelements durch Reibung des Dichtelements am zylindrischen Wandabschnitt entstehen würde, vermieden werden.

Wie oben bereits beschrieben, ist das Dichtelement vorzugsweise zwischen dem Grundkörper und dem Anbauteil angeordnet und bildet bei im Grundkörper angeordnetem Anbauteil eine radial wirkende Dichtfläche mit dem Wandabschnitt und eine axial wirkende Dichtfläche mit der Schulter.

Besonders bevorzugt weist die Spritzpistole einen Anschlag für ein Anbauteil auf, der ferner die maximale Aufspreizung eines Dichtelements definiert. Mit dem Anschlag für ein Anbauteil ist insbesondere ein Anschlag gemeint, der einen Stopp für das Einbringen, insbesondere Einschrauben, des Anbauteils in den Grundkörper bildet. Beispielsweise kann eine Fläche des Anbauteils auf einen Anschlag im Pistolenkörper treffen oder ein Gewinde-Ende bildet den Anschlag. Wenn ein fortlaufender Anordenvorgang, beispielsweise ein fortlaufendes Einschrauben, z.B. einer Farbdüsenanordnung im Grundkörper einer Spritzpistole eine immer größer werdende Aufspreizung eines Dichtelements mit sich bringt, so kann über den Anschlag für das Anbauteil auch die maximale Aufspreizung des Dichtelements definiert werden. Wenn das Anbauteil nicht mehr weiter in den Grundkörper eingebracht, insbesondere eingeschraubt, werden kann, kann in diesem Fall das Dichtelement auch nicht mehr weiter aufgespreizt werden.

In allen Fällen kann das Dichtelement selbstverständlich auch im oder am Pistolenkörper angeordnet sein und das Anbauteil drückt auf das Dichtelement im oder am Pistolenkörper, wodurch die axial wirkende Dichtfläche und die radial wirkende Dichtfläche gebildet werden.

Nachfolgend wird die Erfindung beispielhaft anhand von sechs Figuren näher erläutert. Dabei zeigen:
- **Fig. 1**: eine Explosionsansicht eines Ausführungsbeispiels einer Spritzpistole gemäß dem Stand der Technik,
- **Fig. 2**: eine Schnittansicht einer Farbdüsenanordnung gemäß dem Stand der Technik,
- **Fig. 3**: eine Schnittansicht des Kopfbereichs einer Spritzpistole gemäß dem Stand der Technik,
- **Fig. 4**: eine Schnittansicht eines Ausführungsbeispiels einer erfindungsgemäßen Farbdüsenanordnung bzw. eines an einer Farbdüse angeordneten erfindungsgemäßen Dichtelements im unverbauten Zustand,
- **Fig. 5**: eine Schnittansicht eines Ausführungsbeispiels einer erfindungsgemäßen Farbdüsenanordnung bzw. eines an einer Farbdüse angeordneten erfindungsgemäßen Dichtelements im unverbauten Zustand, und
- **Fig. 6**: eine Detailansicht des Wirkungsbereichs eines Ausführungsbeispiels eines erfindungsgemäßen Dichtelements im eingebauten, d.h. verspannten, d.h. gespreizten Zustand

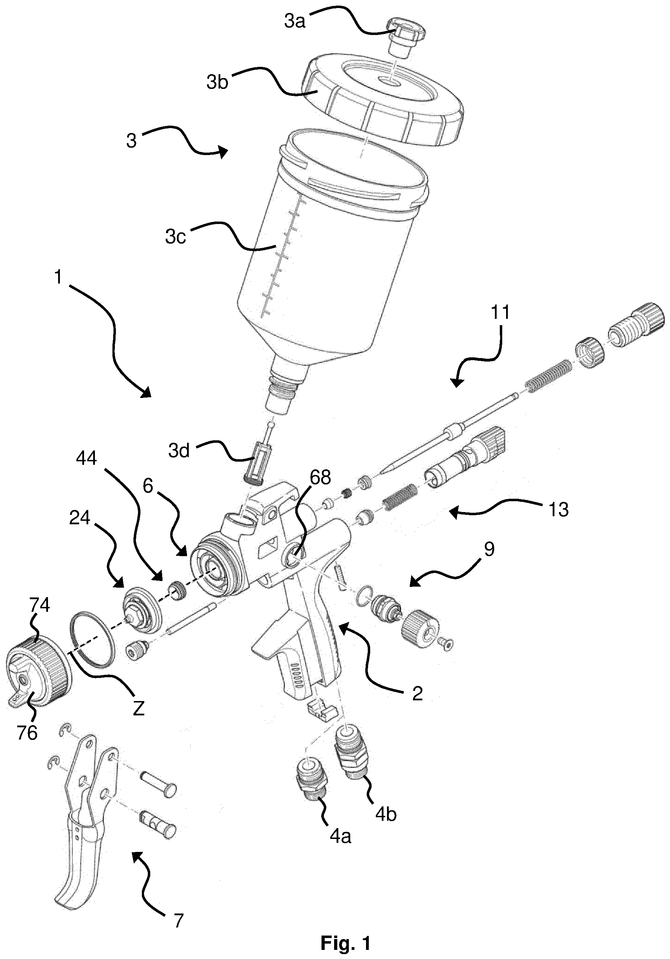

Fig. 1 zeigt eine Explosionsansicht eine Spritzpistole 1 gemäß dem Stand der Technik. Die Spritzpistole 1 kann einen Becher 3 zur Aufnahme und Abgabe des zu verspritzenden Materials aufweisen, wobei der Becher einen Deckel 3b mit einem Ventilstopfen 3a, einen Becherkörper 3c und ein Stecksieb 3d umfasst. Ferner kann die Spritzpistole 1 eine Materialmengenreguliereinrichtung 11, ein Luftmikrometer 13, eine Rund-Breitstrahlregulierungseinrichtung 9, ein Abzugsbügelsystem 7 bestehend aus Abzugsbügel und Befestigungsmitteln, und einen Luftanschluss, der als Standard-Anschluss 4a oder als Drehgelenk-Anschluss 4b ausgestaltet sein kann, umfassen. Am Kopfbereich 6 des Grundkörpers 2 ist eine Farbdüsenanordnung 24 anordenbar. Die Spritzpistole 1 umfasst ferner eine Luftkappe 76, die über einen Luftdüsenring 74 am Kopfbereich 6 befestigbar, insbesondere anschraubbar, ist. Der Kopfbereich 6, die Farbdüsenanordnung 24, und die Luftkappe 76 mit Luftdüsenring 74 sind vorliegend koaxial entlang einer Achse Z angeordnet bzw. anordenbar, welche vorliegend die oben genannte Zentral- bzw. Längsachse des Kopfbereichs 6 des Grundkörpers 2, die Zentral- bzw. Längsachse der Farbdüsenanordnung 24, die Zentral- bzw. Längsachse des oberen Teils des Grundkörpers 2 und die Zentral- bzw. Längsachse einer Aufnahmeöffnung zur Aufnahme der Materialmengenreguliereinrichtung 11 darstellt. Die Spritzpistole 1 weist ferner ein als Farbdüsendichtung ausgestaltetes Dichtelement 44 gemäß dem Stand der Technik auf, welches im Folgenden näher beschrieben wird.

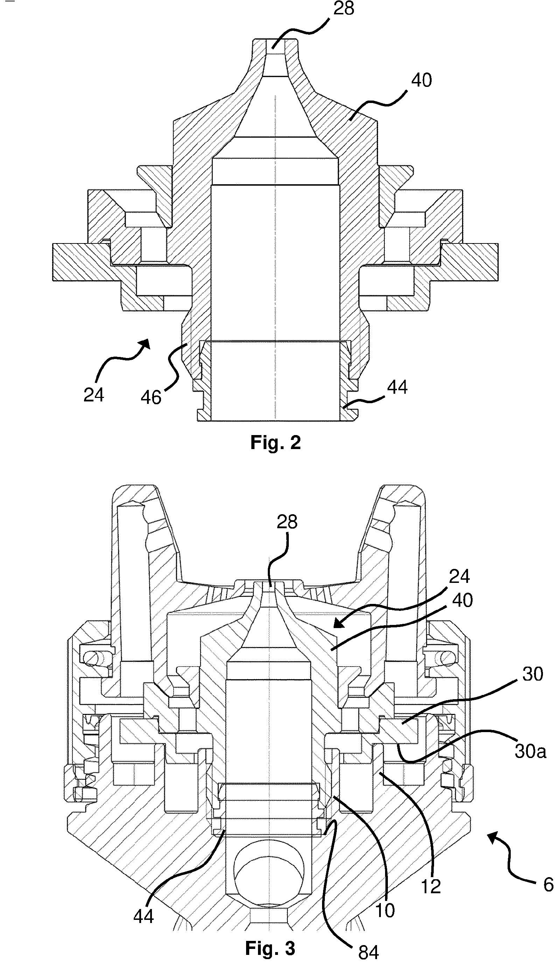

Fig. 2 zeigt eine Farbdüsenanordnung 24 mit einem Dichtelement 44 gemäß dem Stand der Technik in einer Schnittansicht. Das Dichtelement 44 ist vorliegend als Farbdüsendichtung ausgestaltet. Die Farbdüse 40 weist ein Außengewinde 46 auf. Das Dichtelement 44 ist am hinteren Ende der Farbdüse 40 angeordnet. Es ist im Wesentlichen hülsenförmig ausgestaltet und weist an seinem hinteren Ende und in seinem mittleren Bereich jeweils einen umlaufenden Kragen auf.

Fig. 3 zeigt eine Schnittansicht des Kopfbereichs 6 einer Spritzpistole gemäß dem Stand der Technik mit der Farbdüsenanordnung 24 mit dem Dichtelement 44 gemäß dem Stand der Technik aus Fig. 2 im Zusammenbauzustand. Die Farbdüsenanordnung 24, die vorliegend aus einer Materialdüse 40 mit verschiedenen weiteren Komponenten, der Farbauslassöffnung 28 und dem Dichtelement 44 vorliegt, wird über das in Fig. 2 gezeigte Außengewinde 46 und ein Innengewinde 10 im Kopfbereich 6 des Grundkörpers 2 der Spritzpistole 1 in den Grundkörper 2 bzw. in dessen Kopfbereich 6 eingeschraubt.

Das Dichtelement 44 ist bei eingeschraubter Farbdüsenanordnung 24 gegen eine Gegendichtfläche 84 gepresst und dichtet den materialführenden Bereich der Spritzpistole 1, insbesondere den Übergangsbereich zwischen Farbkanal im Grundköper 2 und hohlem Abschnitt der Farbdüse 40 zur Durchleitung des zu verspritzenden Materials, gegenüber dem luftführenden Bereich der Spritzpistole 1 ab. Das Dichtelement 44 bildet dabei lediglich eine axial wirkende Dichtfläche mit dem Grundkörper 2, nämlich an der Gegendichtfläche 84.

Fig. 3 zeigt ferner eine Prallscheibe 30 mit einer Prallfläche 30a und eine mittlere Wandung 12 am Kopfbereich 6 des Grundkörpers 2. Die Bedeutung dieser Komponenten wird weiter unten erläutert.

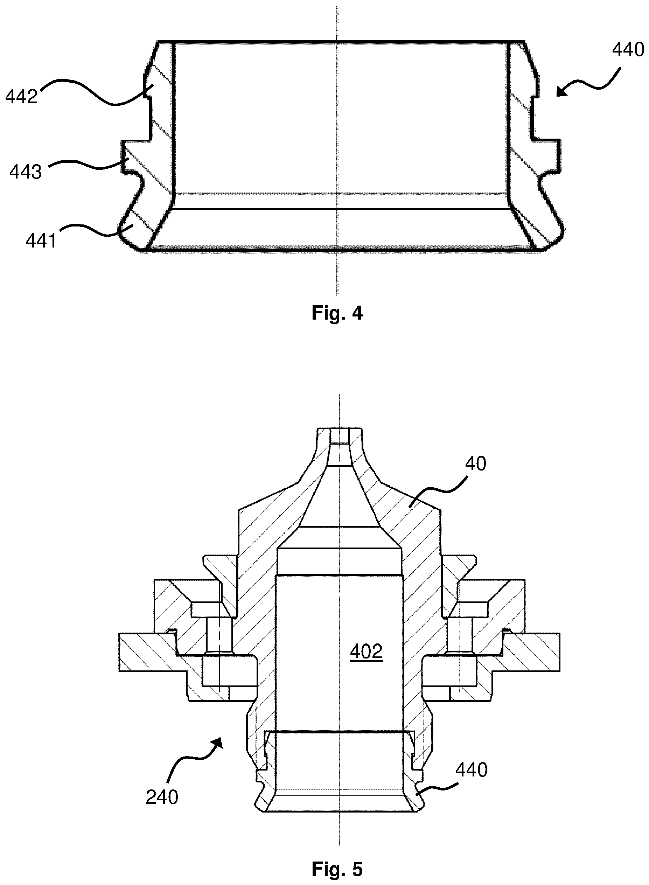

Fig. 4 zeigt ein beispielhaft als Farbdüsendichtung ausgestaltetes Ausführungsbeispiel eines erfindungsgemäßen Dichtelements 440. Das Dichtelement 440 ist vorliegend an der gleichen Position in einer Spritzpistole 1 angeordnet wie das Dichtelement 44 in der Spritzpistole 1 in Fig. 1 und an der gleichen Position an einer Farbdüse angeordnet wie das Dichtelement 44 an der Farbdüse 40 in Fig. 2.

Am vorderen Abschnitt weist das Dichtelement 440 eine Einrichtung zur Anordnung des Dichtelements 440 an einer Farbdüse 40 auf, wobei es sich vorliegend um die gleiche Farbdüse 40 handeln kann wie die in den vorherigen Fig. gezeigte Farbdüse 40, und wobei die Einrichtung zur Anordnung des Dichtelements 440 vorliegend als umlaufende Rastnase 442 ausgestaltet ist. Ein zwischen dem vorderen und dem hinteren Abschnitt des Dichtelements 440 liegender, im Wesentlichen zylindrischer, Abschnitt weist einen umlaufenden Kragen 443 auf, der vorliegend als Stopper für das Aufstecken des Dichtelements 440 auf die Farbdüse 40 fungiert. Das Dichtelement 440 weist ferner einen als Hohlkegelstumpf 441 ausgestalteten hinteren Abschnitt auf.

Fig. 5 zeigt ein Ausführungsbeispiel einer erfindungsgemäßen Farbdüsenanordnung 240, bzw. eine Farbdüse 40 mit einem daran angeordnetem Ausführungsbeispiel eines erfindungsgemäßen Dichtelements 440. Die Farbdüse 40 kann wie die Farbdüse 40 aus Fig. 2 und Fig. 3 ausgestaltet sein.

Der Innendurchmesser des im Wesentlichen zylindrischen mittleren Abschnitts des Dichtelements 440 und der Innendurchmesser des vorderen Abschnitts des Dichtelements 440 sind im Wesentlichen gleich dem Innendurchmesser des hohlzylindrischen Abschnitts 402 der Farbdüse 40. Dadurch ist ein besonders ungestörter Fluss des zu verspritzenden Materials vom Dichtelement 440 in den im Wesentlichen hohlzylindrischen Abschnitt 402 der Farbdüse 40 möglich.

Fig. 6 zeigt eine Detailansicht des Wirkungsbereichs eines Ausführungsbeispiels eines erfindungsgemäßen Dichtelements 440 im eingebauten, d.h. verspannten, d.h. gespreizten Zustand, d.h. bei im Grundkörper 2 einer Spritzpistole 1 angeordneter, insbesondere eingeschraubter, insbesondere festgezogener Farbdüsenanordnung 240.

Ein Bereich zur Aufnahme eines Anbauteils, vorliegend der Farbdüsenanordnung 240 aus Fig. 5, eines Grundkörpers 20, weist einen im Wesentlichen zylindrischen Wandabschnitt 50 mit einer an einem Ende des Wandabschnitts 50 angeordneten Schulter 54, die vorliegend umlaufend ausgestaltet ist, auf. Das Dichtelement 440 bildet eine axial wirkende Dichtfläche 56 und eine radial wirkende Dichtfläche 58 mit dem Grundkörper 20. Insbesondere bildet das Dichtelement 440 eine axial wirkende Dichtfläche 56 mit der Schulter 54 und eine radial wirkende Dichtfläche 58 mit dem zylindrischen Wandabschnitt 50. Hierfür weist das Dichtelement 440 den als Hohlkegelstumpf 441 ausgestalteten hinteren Abschnitt auf. Dieser Hohlkegelstumpf 441 spreizt sich beim Anordnen, insbesondere beim Festziehen, der Farbdüsenanordnung 240 im Grundkörper 20 auf und bildet dadurch die radial wirkende Dichtfläche 58 mit dem Grundkörper 20.

Der Innendurchmesser des im Wesentlichen zylindrischen mittleren Abschnitts des Dichtelements 440 ist im Wesentlichen gleich dem Innendurchmesser des stromaufwärts des Dichtelements 440 liegenden Farbkanals 201. Dadurch ist - zusätzlich zum oben beschriebenen ungestörten Fluss des zu verspritzenden Materials vom Dichtelement 440 in den im Wesentlichen hohlzylindrischen Abschnitt 402 der Farbdüse 40 auch ein besonders ungestörter Fluss des zu verspritzenden Materials vom Farbkanal 201 in das Dichtelement 440 möglich. Ferner können dadurch Stufen vermieden werden, in denen sich Farbe sammelt, eintrocknet und den Materialfluss und die Materialqualität, insbesondere die Materialreinheit negativ beeinflussen könnte.

Der Innendurchmesser des im Wesentlichen zylindrischen Wandabschnitts 50 ist im vorliegenden Ausführungsbeispiel etwas größer als der Außendurchmesser des nicht gespreizten Dichtelements 440 an seiner größten Stelle. Wie oben bereits erwähnt, ist dadurch ein leichteres Anordnen, insbesondere Einschrauben, der Farbdüsenanordnung 240 mit dem Dichtelement 440 in den Grundkörper 20 möglich, da kein oder nur ein sehr geringer Reibungswiderstand zwischen dem Dichtelement 440 und dem zylindrischen Wandabschnitt 50 überwunden werden muss. Ferner kann dadurch eine Abnutzung des Dichtelements 440, der im Falle eines größeren Außendurchmessers des Dichtelements 440 durch Reibung des Dichtelements 440 am zylindrischen Wandabschnitt 50 entstehen würde, vermieden werden.

Abgesehen vom Dichtelement 440 können die in den Fig. 1 bis 3 gezeigten Komponenten auch bei der vorliegenden Erfindung zum Einsatz kommen. Beispielsweise können die erfindungsgemäße Farbdüsenanordnung 240 bzw. das an einer Farbdüse 40 angeordnete Dichtelement in die in Fig. 1 gezeigte Spritzpistole 1 anstelle der dort gezeigten Farbdüsenanordnung 24 bzw. anstelle des dort gezeigten Dichtelements 44 eingebaut werden. Außerdem können im vorliegenden Ausführungsbeispiel eine wie in Fig. 3 gezeigte Prallscheibe 30, insbesondere deren Prallfläche 30a, und eine wie in Fig. 3 gezeigte mittlere Wandung 12 des Kopfbereichs 6 des Grundkörpers 2 einen Anschlag für die Farbdüsenanordnung 240 bilden, der ferner die maximale Aufspreizung des Dichtelements 440 definiert.

Das beschriebene Ausführungsbeispiel beschreibt nur eine beschränkte Auswahl an Ausführungsmöglichkeiten und stellt somit keine Einschränkung der vorliegenden Erfindung dar.

## Patentansprüche

1. Dichtelement (440) zum Abdichten eines Übergangs zwischen einem Grundkörper (20) einer Spritzpistole (1), insbesondere Farbspritzpistole, und einem Anbauteil einer Spritzpistole (1), insbesondere einer Farbdüse (40), **dadurch gekennzeichnet, dass** das Dichtelement (440) derart ausgestaltet ist, dass es bei im Grundkörper (20) angeordnetem Anbauteil eine axial wirkende Dichtfläche (56) und eine radial wirkende Dichtfläche (58) mit dem Grundkörper (20) und/oder dem Anbauteil bildet.

2. Dichtelement (440) nach Anspruch 1, **dadurch gekennzeichnet, dass** es derart ausgestaltet ist, dass es sich beim Anordnen, insbesondere beim Festziehen, des Anbauteils im Grundkörper (20) an zumindest einem Ende aufspreizt und dadurch die radial wirkende Dichtfläche (58) mit dem Grundkörper (20) und/oder dem Anbauteil bildet.

3. Dichtelement (440) nach Anspruch 1 oder 2, **dadurch gekennzeichnet, dass** das Dichtelement (440) einen vorderen Abschnitt mit zumindest einer Einrichtung zur Anordnung des Dichtelements (440) an einem Anbauteil, insbesondere einer Rastnase (442), insbesondere einer umlaufenden Rastnase (442), und einen hinteren Abschnitt aufweist, und dass der hintere Abschnitt als Hohlkegelstumpf (441) ausgestaltet ist.

4. Dichtelement (440) nach einem der Ansprüche 1 bis 3, **dadurch gekennzeichnet, dass** es zumindest teilweise, insbesondere der eine axial wirkende Dichtfläche (56) und eine radial wirkende Dichtfläche (58) bildende Teil, vorzugsweise vollständig, aus einem flexiblen Material besteht, insbesondere aus Kunststoff, vorzugsweise aus HDPE.

5. Anbauteil, insbesondere Farbdüsenanordnung (240), für eine Spritzpistole (1), insbesondere Farbspritzpistole, **dadurch gekennzeichnet, dass** sie zumindest ein Dichtelement (440) nach einem der Ansprüche 1 bis 4 aufweist.

6. Anbauteil nach Anspruch 5, ferner aufweisend zumindest ein vorderes Ende mit einer Farbauslassöffnung (28), ein hinteres Ende mit einer Farbeinlassöffnung und einen dazwischenliegenden, im Wesentlichen hohlzylindrischen, Abschnitt (402), **dadurch gekennzeichnet, dass** das Dichtelement (440) zumindest bereichsweise im Wesentlichen den gleichen Innendurchmesser aufweist wie der im Wesentlichen hohlzylindrische Abschnitt (402).

7. Spritzpistole (1), insbesondere Farbspritzpistole, **dadurch gekennzeichnet, dass** sie zumindest ein Dichtelement (440) nach einem der Ansprüche 1 bis 4 und/oder ein Anbauteil nach einem der Ansprüche Anspruch 5 bis 6 aufweist.

8. Spritzpistole (1) nach Anspruch 7, ferner aufweisend zumindest einen Grundkörper (20), **dadurch gekennzeichnet, dass** der Grundkörper (20) zumindest einen Bereich zur Aufnahme eines Anbauteils, insbesondere einer Farbdüse (40) und/oder einer Farbdüsenanordnung (240), aufweist, wobei der Bereich zumindest einen im Wesentlichen zylindrischen Wandabschnitt (50), insbesondere einen zumindest teilweise ein Gewinde, vorzugsweise ein Innengewinde, aufweisenden Wandabschnitt (50), mit einer an einem Ende des Wandabschnitts (50) angeordneten Schulter (54), insbesondere einer umlaufend ausgestalteten Schulter (54), aufweist.

9. Spritzpistole (1) nach Anspruch 8, **dadurch gekennzeichnet, dass** ein Innendurchmesser des Bereichs zur Aufnahme eines Anbauteils, insbesondere ein Innendurchmesser des im Wesentlichen zylindrischen Wandabschnitts (50), zumindest bereichsweise größer oder gleich einem Außendurchmesser des Dichtelements (440) ist.

10. Spritzpistole (1) nach Anspruch 8 oder 9, **dadurch gekennzeichnet, dass** das Dichtelement (440) zwischen dem Grundkörper (20) und dem Anbauteil angeordnet ist und bei im Grundkörper (20) angeordnetem Anbauteil eine radial wirkende Dichtfläche (58) mit dem Wandabschnitt (50) und eine axial wirkende Dichtfläche (56) mit der Schulter (54) bildet.

11. Spritzpistole (1) nach einem der Ansprüche 7 bis 10, **dadurch gekennzeichnet, dass** sie einen Anschlag für ein Anbauteil aufweist, der ferner die maximale Aufspreizung eines Dichtelements (440) definiert.
